# EUROPÄISCHE PATENTSCHRIFT

(11) **EP 2 687 825 B1**
(45) Veröffentlichungstag und Bekanntmachung des Hinweises auf die Patenterteilung: **26.08.2020**
(21) Anmeldenummer: 13003370.7
(22) Anmeldetag: 03.07.2013
(51) Int. Cl.: G01F 1/56, G01F 1/716

(54) **Kernmagnetisches Durchflussmessgerät**
Nuclear magnetic flow meter
Débitmètre à noyau magnétique

(30) Priorität: 16.07.2012 DE 102012013935
(43) Veröffentlichungstag der Anmeldung: 22.01.2014
(73) Patentinhaber: Krohne AG, 4019 Basel (CH)
(72) Erfinder: Zoeteweij, Marco Leendert, 3344 EP Hendrik-Ido-Ambach (NL); Bousché, Olaf Jean Paul, 3319 PH Dordrecht (NL); Hogendoorn, Cornelius Johannes, 4211 BG Spijk (NL); de Graaf, Ariël, 3511 BV Utrecht (NL); Pors, Jan Teunis Aart, 3262 EK Oud-Beijerland (NL); Ramondt, Jan-Willem, 4817 KL Breda (NL)
(74) Vertreter: Gesthuysen Patent- und Rechtsanwälte

(56) Entgegenhaltungen:
- US-A- 4 862 128
- US-A- 5 684 399
- US-A1- 2008 174 309

## Beschreibung

Die Erfindung betrifft ein kernmagnetisches Durchflussmessgerät zur Durchflussmessung eines durch ein Messrohr strömenden Mediums mit einer Magnetisierungseinrichtung zur Magnetisierung und zur Variation der Magnetisierung des durch das Messrohr strömenden Mediums über eine Magnetisierungsstrecke entlang der Längsachse des Messrohrs, wobei die Magnetisierungseinrichtung zur Erzeugung des der Magnetisierung des Mediums dienenden Magnetfelds mit Permanentmagneten versehen ist und mindestens zwei in Richtung der Längsachse des Messrohrs hintereinander angeordnete Magnetisierungssegmente aufweist.

Die Atomkerne der Elemente, die einen Kernspin besitzen, besitzen auch ein durch den Kernspin hervorgerufenes magnetisches Moment. Der Kernspin kann als ein durch einen Vektor beschreibbarer Drehimpuls aufgefasst werden, und entsprechend kann auch das magnetische Moment durch einen Vektor beschrieben werden, der parallel zum Vektor des Drehimpulses ist. Der Vektor des magnetischen Moments eines Atomkerns richtet sich bei Anwesenheit eines makroskopischen Magnetfelds parallel zu dem Vektor des makroskopischen Magnetfelds an der Stelle des Atomkerns aus. Dabei präzessiert der Vektor des magnetischen Moments des Atomkerns um den Vektor des makroskopischen Magnetfelds an der Stelle des Atomkerns. Die Frequenz der Präzession wird als Larmorfrequenz ω_{L} bezeichnet und ist proportional zum Betrag der Magnetfeldstärke B. Die Larmorfrequenz berechnet sich gemäß ω_{L} = γ . B. Darin ist γ das gyromagnetische Verhältnis, welches für Wasserstoffatomkerne maximal ist.

Mess- und Analyseverfahren, welche die Eigenschaft der Präzession von Atomkernen mit einem magnetischen Moment bei Anwesenheit eines makroskopischen Magnetfelds ausnutzen, werden als kernmagnetische Resonanz-Mess- oder -Analyseverfahren bezeichnet. Der englische Begriff für kernmagnetische Resonanz ist nuclear magnetic resonance. Für gewöhnlich werden die von den präzessierenden Atomkernen unter verschiedenen Randbedingungen in einer Sensorspule induzierten Spannungen als Ausgangsgröße für die Mess- und Analyseverfahren verwendet. Ein Beispiel für Messgeräte, welche die kernmagnetische Resonanz ausnutzen, sind die kernmagnetischen Durchflussmessgeräte, die den Durchfluss des durch das Messrohr strömenden mehrphasigen Mediums messen und das Medium analysieren.

Voraussetzung für eine Analyse unter Ausnutzung kernmagnetischer Resonanz ist, dass die zu analysierenden Phasen des Mediums zu unterscheidbaren kernmagnetischen Resonanzen angeregt werden können. Die Analyse kann die Strömungsgeschwindigkeiten der einzelnen Phasen des Mediums und die relativen Anteile der einzelnen Phasen am mehrphasigen Medium umfassen. Kernmagnetische Durchflussmessgeräte können z. B. zur Analyse des aus Ölquellen geförderten mehrphasigen Mediums eingesetzt werden. Das Medium besteht im Wesentlichen aus den Phasen Rohöl, Erdgas und Salzwasser, wobei alle Phasen Wasserstoffatomkerne enthalten.

Die Analyse des aus Ölquellen geförderten Mediums kann auch mit sogenannten Testseparatoren erfolgen. Diese zweigen einen kleinen Teil des geförderten Mediums ab, trennen die einzelnen Phasen des Mediums voneinander und bestimmen die Anteile der einzelnen Phasen an dem Medium. Jedoch sind Testseparatoren nicht im Stande, Rohölanteile kleiner als 5 % zuverlässig zu messen. Da der Rohölanteil einer jeden Quelle stetig absinkt und der Rohölanteil einer Vielzahl von Quellen bereits geringer als 5 % ist, ist es derzeit nicht möglich, diese Quellen unter Verwendung von Testseparatoren wirtschaftlich auszubeuten. Um auch Quellen mit einem sehr geringen Rohölanteil weiterhin ausbeuten zu können, sind entsprechend genaue Durchflussmessgeräte erforderlich.

Aus der Gleichung zur Berechnung der Larmorfrequenz ω_{L} ist unmittelbar ersichtlich, dass die Larmorfrequenz ω_{L} proportional zum Betrag der Magnetfeldstärke B des makroskopischen Magnetfelds im zu untersuchenden Medium ist und somit der Betrag der Magnetfeldstärke auch unmittelbar auf die Frequenz der in der Sensorspule induzierten Spannung wirkt. Auch die Richtung des makroskopischen Magnetfelds in Bezug auf die Orientierung der Sensorspule beeinflusst die in der Sensorspule induzierten Spannungen. Im Allgemeinen führen Abweichungen des das Medium durchsetzenden makroskopischen Magnetfelds vom Ideal des homogenen Magnetfelds zu einer reduzierten Messqualität und damit zu ungenaueren Messergebnissen.

Von den zuvor angesprochenen unerwünschten Abweichungen sind erwünschte und bekannte Gradienten des Magnetfelds im Medium ausdrücklich ausgenommen.

Auf die Betrachtung von Magnetfeldern mit Gradienten wird verzichtet, da die folgenden Ausführungen in offensichtlicher Weise auf Magnetfelder mit Gradienten übertragen werden können.

Aus der amerikanischen Offenlegungsschrift 2008/0,174,309 ist das kernmagnetische Durchflussmessgerät bekannt, von dem die Erfindung ausgeht. Dabei gilt für die zu der Magnetisierungseinrichtung gehörenden Magnetisierungselemente, dass sie hohlzylinderförmig ausgeführt sind und in ihren Innenräumen ein homogenes Magnetfeld aufweisen. Die Magnetisierungssegmente sind derart auf dem Messrohr hintereinander angeordnet, dass ihre konzentrischen Längsachsen mit der Längsachse des Messrohrs zusammenfallen. Die Magnetisierung des durch das Messrohr strömenden Mediums kann dadurch in unterschiedlicher Weise eingestellt werden, also variiert werden, dass die homogenen Magnetfelder der einzelnen Magnetisierungselemente entweder parallel oder antiparallel zueinander ausgerichtet werden.

Die Figur 7 der amerikanischen Offenlegungsschrift 2008/0,174,309 zeigt im Einzelnen eine Magnetisierungseinrichtung mit sechs hintereinander angeordneten Magnetisierungssegmenten. Dabei sind bei der Realisierung gemäß der Skizze a) alle Magnetisierungssegmente so eingestellt, dass die homogenen Magnetfelder der einzelnen Magnetisierungssegmente im Medium parallel zueinander ausgerichtet sind. Demgegenüber sind bei der Realisierung gemäß der Skizze b) jeweils drei Magnetisierungssegmente zu einer Gruppe zusammengefasst. Innerhalb jeder Gruppe sind die homogenen Magnetfelder der Magnetisierungssegmente parallel zueinander ausgerichtet. Jedoch sind die homogenen Magnetfelder der einen Gruppe antiparallel zu den homogenen Magnetfeldern der anderen Gruppe ausgerichtet. Schließlich sind gemäß der Skizze c) auch wieder zwei Gruppen von Magnetisierungssegmenten gebildet, jedoch eine Gruppe mit vier Magnetisierungssegmenten und die andere Gruppe mit zwei Magnetisierungssegmenten. Auch hier gilt, dass die homogenen Magnetfelder der einzelnen Magnetisierungssegmente in jeder Gruppe parallel zueinander ausgerichtet sind, die homogenen Magnetfelder der einzelnen Magnetisierungselemente der einen Gruppe jedoch antiparallel zu den homogenen Magnetfeldern der Magnetisierungssegmente der anderen Gruppe ausgerichtet sind.

Aus der Druckschrift US 5,684,399 A ist ein kernmagnetisches Durchflussmessgerät zur Durchflussmessung eines durch ein Messrohr strömenden Mediums bekannt. Das kernmagnetische Durchflussmessgerät weist eine Magnetisierungseinrichtung zur Magnetisierung des durch das Messrohr strömenden Mediums über eine Magnetisierungsstrecke entlang der Längsachse des Messrohrs auf. Die Magnetisierungseinrichtung ist zur Erzeugung des der Magnetisierung des Mediums dienenden Magnetfelds mit Permanentmagneten versehen und weist mindestens zwei in Richtung der Längsachse des Messrohrs hintereinander angeordnete Magnetisierungssegmente auf, wobei jedes der Magnetisierungssegmente durch einen der Permanentmagneten gebildet wird. Auch bei über der Länge der Magnetisierungsstrecke unterschiedlichen Magnetfeldstärken in dem Medium weist das Magnetfeld über die gesamte Magnetisierungsstrecke die gleiche Richtung auf.

Aus der Druckschrift US 4,862,128 A sind Magnetstrukturen für elektronische Geräte wie zum Beispiel bildgebende kernmagnetische Geräte bekannt. Jede der Magnetstrukturen besteht aus einem magnetischen Innenring und einem magnetischen Außenring, wobei der Außenring um den Innenring angeordnet ist. Der Innenring und der Außenring können unabhängig voneinander rotiert werden, sodass im Innenraum des Innenrings unterschiedliche Magnetfeldstärken eingestellt werden können. Die Druckschrift offenbart zwei Anwendungsbeispiele, bei denen mindestens zwei der Magnetstrukturen aufeinander gestapelt werden. Das erste Anwendungsbeispiel ist ein Wiggler. Der Wiggler besteht aus einer Mehrzahl der Magnetstrukturen, wobei das Magnetfeld in den Innenräumen von jeweils zwei aufeinanderfolgenden Magnetstrukturen um einen Winkel von 180° gedreht ist. Das zweite Anwendungsbeispiel ein Twister. Der Twister besteht aus einer Mehrzahl der Magnetstrukturen, wobei jeweils zwei aufeinanderfolgende Magnetstrukturen um einen festen Winkel gegeneinander so gedreht sind, dass die Abfolge der Magnetfelder in den Innenräumen der Magnetstrukturen eine Helix beschreibt. Durch das Magnetfeld im Innenraum des Wigglers und des Twisters wird ein Elektronenstrahl geführt.

Ausgehend von dem zuvor im Einzelnen beschriebenen Stand der Technik liegt der Erfindung die Aufgabe zugrunde, ein in Bezug auf die erreichbare Qualität der Messergebnisse verbessertes kernmagnetisches Durchflussmessgerät anzugeben.

Das erfindungsgemäße kernmagnetische Durchflussmessgerät ist zunächst und im Wesentlichen dadurch gekennzeichnet, dass auch bei über die Länge der Magnetisierungsstrecke unterschiedlicher Magnetfeldstärke im Medium über die gesamte Magnetisierungsstrecke das Magnetfeld die gleiche Richtung aufweist.

Die Verbesserung der erreichbaren Qualität der Messergebnisse dadurch, dass auch bei über die Länge der Magnetisierungsstrecke unterschiedlicher Magnetfeldstärke im Medium über die gesamte Magnetisierungsstrecke das Magnetfeld die gleiche Richtung aufweist, ist überraschend. Ein kernmagnetisches Durchflussmessgerät, das erfindungsgemäß ausgeführt ist, bestimmt zum Beispiel die Strömungsgeschwindigkeiten der einzelnen Phasen des Mediums und die relativen Anteile der einzelnen Phasen an einem mehrphasigen Medium in dem Messrohr genauer als ein kernmagnetisches Durchflussmessgerät, das nicht erfindungsgemäß ausgeführt ist, das zum Beispiel so ausgeführt ist, wie das zuvor im Einzelnen beschrieben ist.

An dieser Stelle sei daraufhingewiesen, dass es im Rahmen der Erfindung primär um ein kernmagnetisches Durchflussmessgerät geht, das jedoch das, was das erfindungsgemäße kernmagnetische Durchflussmessgerät erfindungsgemäß kennzeichnet, nicht auf die Anwendung bei kernmagnetischen Durchflussmessgeräten beschränkt ist, vielmehr auch anderweitig angewendet werden kann, zum Beispiel ganz allgemein in der petrochemischen Industrie oder in der chemischen Industrie.

Wenn zuvor ausgeführt worden ist, das erfindungsgemäß im Medium über die gesamte Magnetisierungsstrecke das Magnetfeld die gleiche Richtung aufweist, so ist damit nicht gesagt, dass diese gleiche Richtung nur eine ganz bestimmte sein kann. Vielmehr kann das Magnetfeld eine beliebige Richtung haben, mit der Einschränkung, dass sie alle die gleiche Richtung aufweisen.

Weiter ist das erfindungsgemäße kernmagnetische Durchflussmessgerät dadurch gekennzeichnet, dass jedes der Magnetisierungssegmente einen mit Permanentmagneten bestückten Innenträger und einen mit Permanentmagneten bestückten Außenträger aufweist und der Innenträger um das Messrohr und der Außenträger um den Innenträger angeordnet ist und dass zur Variation der Magnetfeldstärke im Medium und damit auch zur Variation der Magnetisierung des Mediums die Orientierung zwischen dem Innenträger und dem Au-ßenträger durch Drehung des Innenträgers oder / und des Außenträgers um eine Segmentdrehachse einstellbar ist, wobei für gewöhnlich die Segmentdrehachse mit der Längsachse des Messrohrs zusammenfällt.

Bei dem erfindungsgemäßen kernmagnetischen Durchflussmessgerät ist durch Drehung des Innenträgers oder / und des Außenträgers um die Segmentdrehachse die Magnetfeldstärke im Medium, die sich durch Überlagerung des von den Permanentmagneten des Innenträgers erzeugten Magnetfelds und des von den Permanentmagneten des Außenträgers erzeugten Magnetfelds ergibt, einstellbar. Durch diese Einstellbarkeit der Magnetfeldstärke über der Magnetisierungsstrecke ist auch die Magnetisierung des durch das Messrohr strömenden Mediums einstellbar.

Selbstverständlich gibt es verschiedene Möglichkeiten, das erfindungsgemäße kernmagnetische Durchflussmessgerät auszugestalten und weiterzubilden.

Bei dem erfindungsgemäßen kernmagnetischen Durchflussmessgerät können die alleine vom Innenträger resultierende Magnetfeldstärke und die alleine vom Außenträger resultierende Magnetfeldstärke unterschiedlich sein. Vorzugsweise sind jedoch die alleine vom Innenträger resultierende Magnetfeldstärke und die alleine vom Außenträger resultierende Magnetfeldstärke gleich. Dann gibt es, unter Beachtung der primären Lehre der Erfindung, zwei Einstellmöglichkeiten. Eine Einstellmöglichkeit ist dadurch gekennzeichnet, dass sich die Magnetfelder des Innenträgers und des Außenträgers "addieren", das resultierende Magnetfeld also eine Magnetfeldstärke hat, die doppelt so groß ist wie die durch den Innenträger realisierte Magnetfeldstärke beziehungsweise die durch den Außenträger realisierte Magnetfeldstärke. Bei der anderen Einstellmöglichkeit, bei der dann die Orientierung zwischen dem Innenträger und dem Außenträger um 180° verschieden ist gegenüber der zuvor beschriebenen Einstellmöglichkeit, heben sich die Magnetfelder gegenseitig auf, so dass im Medium kein Magnetfeld wirksam ist.

Die Orientierung zwischen dem Innenträger und dem Außenträger kann dadurch realisiert werden, dass sowohl der Innenträger als auch der Außenträger um die Segmentdrehachse gedreht werden. Vorzugsweise ist jedoch der Innenträger in Bezug auf das Messrohr feststehend realisiert und der Außenträger, konzentrisch um den Innenträger angeordnet, um die Segmentdrehachse drehbar. Die drehbare Realisierung des Außenträgers in Bezug auf den Innenträger ist vorteilhaft gegenüber der drehbaren Anordnung des Innenträgers in Bezug zum Außenträger, weil der Innenträger durch den Außenträger verdeckt ist und daher die Betätigung des Außenträgers einfacher zu realisieren ist als die Betätigung des Innenträgers.

Die um die Segmentdrehachse drehbare Lagerung des Außenträgers kann dadurch umgesetzt sein, dass der Innenträger an jedem seiner beiden Enden in Bezug auf die Segmentdrehachse fest mit jeweils einem Segmentträger verbunden ist und der Außenträger mit den Segmentträgern wenigstens ein Axialgleitlager bildet, während der Außenträger mit dem Innenträger wenigstens ein Radialgleitlager bildet. Die durch das Axialgleitlager und das Radialgleitlager verbleibende Bewegungsfreiheit des Außenträgers ist die Drehbarkeit des Außenträgers um die Segmentdrehachse.

Die Betätigung des drehbar gelagerten Außenträgers kann durch einen Aktor erfolgen. Der Aktor kann einen am Außenträger konzentrisch zur Segmentdrehachse angeordneten Zahnkranz, ein in den Zahnkranz eingreifendes Ritzel und einen das Ritzel drehenden Elektromotor umfassen. Durch Ansteuerung des Elektromotors wird das vom Elektromotor aufgebrachte Drehmoment über das Ritzel auf den Zahnkranz übertragen, so dass der Außenträger in Bezug auf den Innenträger gedreht wird. Als Elektromotoren können Synchronmotor und vorzugsweise Schrittmotoren eingesetzt sein.

Ist zur Betätigung des drehbar gelagerten Außenträgers ein Aktor vorgesehen, so kann der Aktor auch zur Einstellung der Orientierung mit dem maximalen Drehfeld im Medium und dem minimalen Magnetfeld im Medium ausgebildet sein. Bei Verwendung eins Schrittmotors ist die Orientierung mit dem maximalen Magnetfeld im Medium und mit dem minimalen Magnetfeld im Medium durch die Anzahl der Schritte bei gegebener Drehrichtung, ausgehend von einer bekannte anfänglichen Orientierung, bekannt. Die anfängliche Orientierung kann durch eine Fahne am Außenträger und eine sich nicht mitdrehende Lichtschranke detektierbar sein. Alternativ können auch die Orientierung mit dem maximalen Magnetfeld im Medium und mit dem minimalen Magnetfeld im Medium durch Fahnen und Lichtschranken signalisierbar sein. Dann ist die Verwendung eines Schrittmotors nicht erforderlich, und es kann beispielsweise ein Synchronmotor verwendet sein. Selbstverständlich können auch andere Orientierungen zwischen dem Innenträger und dem Außenträger mit den zuvor beschriebenen Mitteln reproduzierbar einstellbar sein.

In einer weiteren bevorzugten Ausgestaltung der Erfindung wird das Medium durch ein mit Permanentmagneten bestücktes Magnetisierungssegment eines zweiten Typs magnetisiert, bei dem der magnetische Widerstand zur Variation der Magnetfeldstärke im Medium und damit auch zur Variation der Magnetisierung des Mediums einstellbar ist. Die Einstellbarkeit des magnetischen Widerstands kann beispielsweise dadurch umgesetzt sein, dass das Magnetisierungssegment aus einem ersten Teilsegment und aus einem zweiten Teilsegment besteht und durch die Teilsegmente beabstandet sind. Der sich zwischen dem ersten Teilsegment und dem zweiten Teilsegment bei Beabstandung ergebende Spalt stellt den magnetischen Widerstand des Magnetisierungssegments dar und ist über die Größe des Spalts einstellbar. Dabei führt eine Vergrößerung des Spalts zu einem größeren magnetischen Widerstand und dieser zu einer Abnahme der Magnetfeldstärke im Medium. Fließt der das Medium durchsetzende magnetische Fluss auch durch ein Joch, so ist der magnetische Widerstand auch in diesem Joch beeinflussbar. Beispielsweise kann in diesem Joch ein Schlitz vorhanden sein, durch welchen der magnetische Fluss fließt, und durch Einschieben oder Herausziehen einer magnetisch gut leitenden Füllung in den Schlitz kann der magnetische Widerstand eingestellt werden.

In einer anderen bevorzugten Ausgestaltung der Erfindung ist die Magnetisierungsvorrichtung oder zumindest ein Magnetisierungssegment bewegbar entlang der Längsachse des Messrohrs angeordnet. Durch den einstellbaren Abstand der Magnetisierungsvorrichtung oder des Magnetisierungssegments entlang der Längsachse des Messrohrs zu einer Messvorrichtung ist die Magnetisierung des Mediums an der Messvorrichtung einstellbar. Auf diese Weise können Messungen mit verschiedenen Magnetisierungen des Mediums vorgenommen werden.

Bisher wurde bezüglich der Erzeugung des Magnetfelds durch die beschriebene Magnetisierungseinrichtung lediglich ausgeführt, dass es von Permanentmagneten erzeugt ist. Eine ganz besonders bevorzugte Möglichkeit der Erzeugung des Magnetfelds durch Permanentmagneten erfolgt durch die Anordnung der Permanentmagneten als Halbach-Array. Bei den Magnetisierungssegment sind dann sowohl die Permanentmagneten des Innenträgers als Halbach-Array angeordnet als auch die Permanentmagneten des Außenträgers als Halbach-Array angeordnet. Dabei erstreckt sich das Magnetfeld des Innenträgers außerhalb des Innenträgers im Wesentlichen in den Innenraum des Innenträgers. Entsprechend erstreckt sich das Magnetfeld des Außenträgers außerhalb des Außenträgers im Wesentlichen in den Innenraum des Außenträgers.

Bei den bisher vorgestellten erfindungsgemäßen Magnetisierungsvorrichtungen erfolgt die Magnetisierung des durch das Messrohr strömenden Mediums ausschließlich durch von Permanentmagneten erzeugte Magnetfelder. Die Variation der Magnetfeldstärke im Medium erfolgt durch Drehung des Außenträgers und des Innenträgers zueinander und gegebenenfalls durch Variation des magnetischen Widerstands. Dabei erfolgt die Variation der Magnetfeldstärke durch mechanische Veränderungen an der Magnetisierungseinrichtung. In einer alternativen Ausgestaltung der Erfindung wird zur Variation der Magnetfeldstärke im Medium und damit zur Variation der Magnetisierung des Mediums mindestens ein Elektromagnet an der Magnetisierungseinrichtung derart angeordnet, dass das Magnetfeld des Elektromagneten parallel oder antiparallel zum Magnetfeld der Magnetisierungseinrichtung ausgerichtet ist. Durch den Elektromagneten ist es damit möglich, das im Medium vorhandene Magnetfeld entweder um die von dem Elektromagneten erzeugte Magnetfeldstärke zu reduzieren oder die Magnetfeldstärke um die von dem Elektromagneten erzeugte Magnetfeldstärke zu vergrößern. Mechanische Veränderungen zur Variation der Magnetfeldstärke im Medium sind daher nicht mehr erforderlich.

Im Einzelnen gibt es nun verschiedene Möglichkeiten, das erfindungsgemäße kernmagnetische Durchflussmessgerät auszugestalten und weiterzubilden. Dazu wird verwiesen auf die dem Patentanspruch 1 nachgeordneten Patentansprüche und auf die Beschreibung eines bevorzugten Ausführungsbeispiels in Verbindung mit der Zeichnung von zu dem erfindungsgemäßen kernmagnetischen Durchflussmessgerät gehörenden Magnetisierungseinrichtungen. In der Zeichnung zeigen
- Fig. 1a: ein Ausführungsbeispiel einer Magnetisierungseinrichtung mit drei Magnetisierungssegmenten,
- Fig. 1b: die Magnetisierungseinrichtung aus Fig. 1a in Aufsicht,
- Fig. 2a: eines der Magnetisierungssegmente der Magnetisierungseinrichtung aus Fig. 1a,
- Fig. 2b: das Magnetisierungssegment aus Fig. 2a in Explosionsdarstellung,
- Fig. 3: den Innenmagnetträger und den Außenmagnetträger des Magnetisierungssegments aus Fig. 2b,
- Fig. 4a: das Magnetfeld im Innenraum des Innenmagnetträgers aus Fig. 3,
- Fig. 4b: das Magnetfeld Innenraum des Außenmagnetträgers aus Fig. 3,
- Fig. 5a: das im Innenraum des Innenträgers des Magnetisierungssegments aus Fig. 2a resultierende Magnetfeld bei einer ersten Orientierung zwischen dem Innenträger und dem Außenträger und
- Fig. 5b: das im Innenraum des Innenträgers des Magnetisierungssegments aus Fig. 2a resultierende Magnetfeld bei einer zweiten Orientierung zwischen dem Innenträger und dem Außenträger.

Erfindungsgemäß geht es um ein kernmagnetisches Durchflussmessgerät zur Messung eines durch ein Messrohr 5 strömenden Mediums 6 mit einer Magnetisierungseinrichtung 1 zur Magnetisierung des durch das Messrohr 5 strömenden Mediums 6 über eine Magnetisierungsstrecke 7 entlang der Längsachse 8 des Messrohrs 5. Dabei ist die Magnetisierungseinrichtung 1 zur Erzeugung des der Magnetisierung des Mediums 6 dienenden Magnetfelds 3, 4 mit Permanentmagneten 2 versehen und weist die Magnetisierungseinrichtung 1 mindestens zwei in Richtung der Längsachse 8 des Messrohrs 5 hintereinander angeordnete Magnetisierungssegmente 9 auf. Das ist weitgehend in den Figuren nicht dargestellt, weil die Figuren im Wesentlichen die zu dem erfindungsgemäßen kernmagnetischen Durchflussmessgerät gehörende Magnetisierungseinrichtung 1 zeigen.

Erfindungsgemäß weist das Magnetfeld 3, 4 im Medium 6 über die gesamte Magnetisierungsstrecke 7 die gleiche Richtung auf.

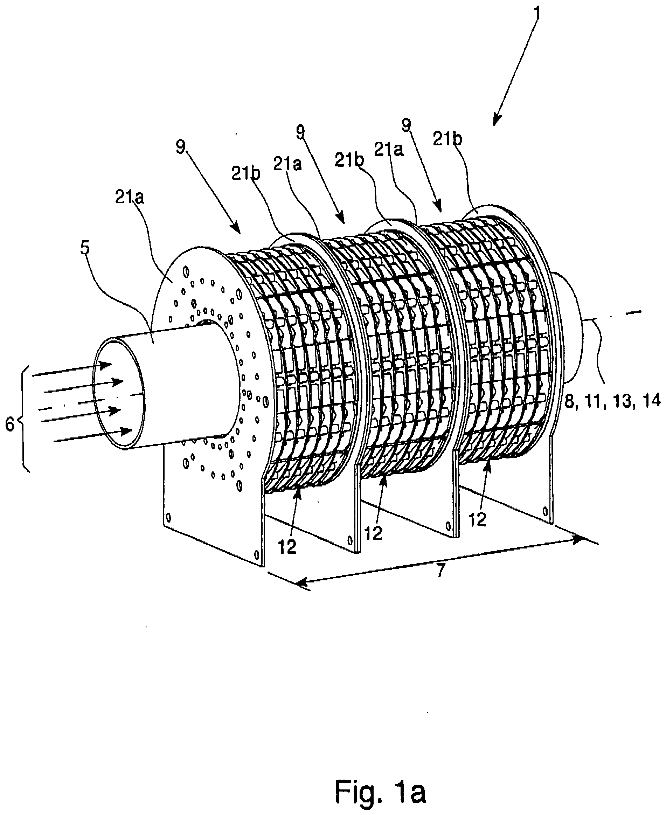

Die Figuren zeigen ein Ausführungsbeispiel einer zu dem erfindungsgemäßen kernmagnetischen Durchflussmessgerät gehörenden Magnetisierungseinrichtung 1, wobei in der Fig. 1a die Magnetisierungseinrichtung 1 in ihrer Gesamtheit dargestellt ist.

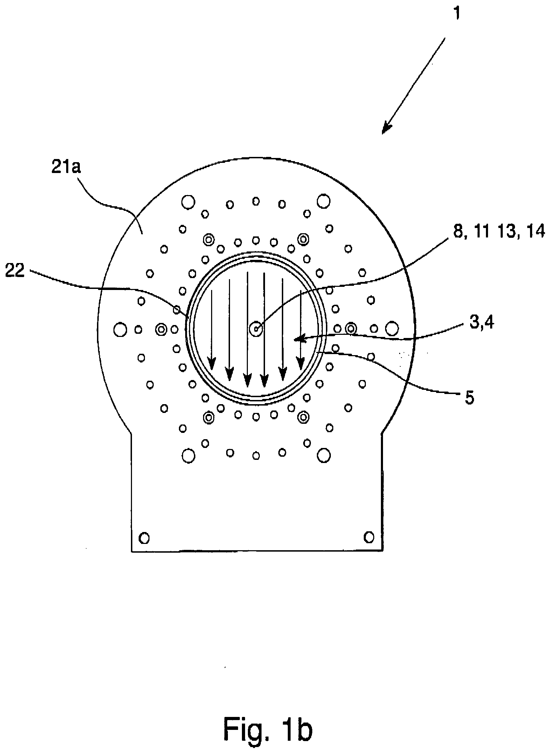

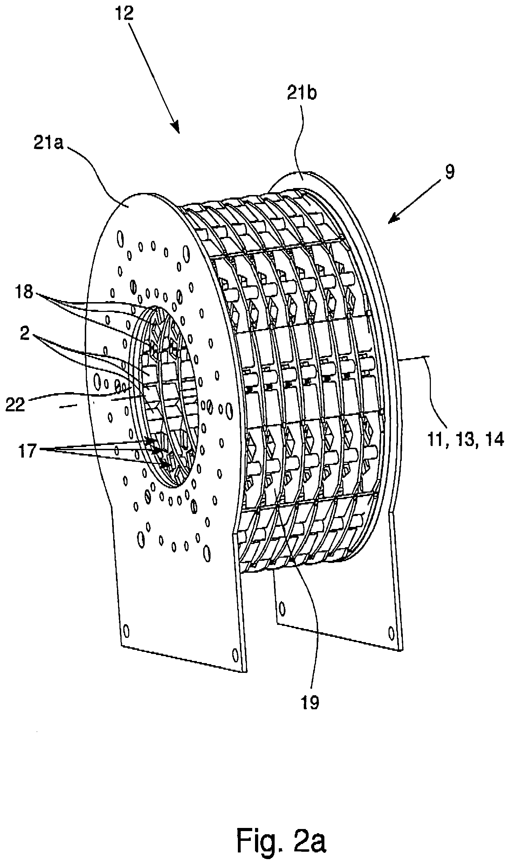

Eine Mehrzahl von stabförmigen Permanentmagneten 2, siehe die Figuren 2a bis 5b, erzeugt ein Magnetfeld 3, 4, siehe die Figuren 1b und 3 bis 5b, das ein durch ein Messrohr 5 strömendes Medium 6 durchsetzt. Das Erdmagnetfeld bleibt unberücksichtigt. Die Durchsetzung des Mediums 6 mit dem Magnetfeld 3, 4 erfolgt über eine Magnetisierungsstrecke 7, die sich entlang der Längsachse 8 des Messrohrs 5 erstreckt. Selbstverständlich ist das Messrohr 5, zumindest über die Magnetisierungsstrecke 7, aus einem Material, welches Magnetfelder nicht beeinflusst. Die Magnetisierung des strömenden Mediums 6 erfolgt während der sich aus der Länge der Magnetisierungsstrecke 7 und der Strömungsgeschwindigkeit des Mediums 6 ergebenden Verweildauer des Mediums 6 im Bereich der Magnetisierungsstrecke 7.

Die Magnetisierungseinrichtung 1 ist modular aus einzelnen Magnetisierungssegmenten 9 aufgebaut, das heißt, sie kann beliebig viele Magnetisierungssegmente 9 umfassen. Das Ausführungsbeispiel umfasst drei Magnetisierungssegmenten 9, siehe Fig. 1a, könnte aber aufgrund der Modularität auch weniger oder mehr Magnetisierungssegmente 9 aufweisen.

Im dargestellten Ausführungsbeispiel bilden die drei Magnetisierungssegmente 9 jeweils gleich lange Teilmagnetisierungsstrecken, welche zusammen die Magnetisierungsstrecke 7 bilden. Das von den Permanentmagneten 2 erzeugte Magnetfeld 3, 4 im Medium 6 über die Magnetisierungsstrecke 7 weist nur eine einzige Richtung auf, siehe Fig. 1b. Wenn hier von einer einzigen Richtung des Magnetfelds 3, 4 im Medium 6 über der Magnetisierungstrecke 7 gesprochen wird, so schließt das Schwankungen der Richtung nicht aus. Jedoch sind die Schwankungen der Richtung so gering, dass die angestrebte Messgenauigkeit erreicht wird. Randeffekte des Magnetfelds 3, 4, wie sie zum Beispiel an den Enden der Magnetisierungsstrecke 7 auftreten, sind in den Figuren nicht dargestellt.

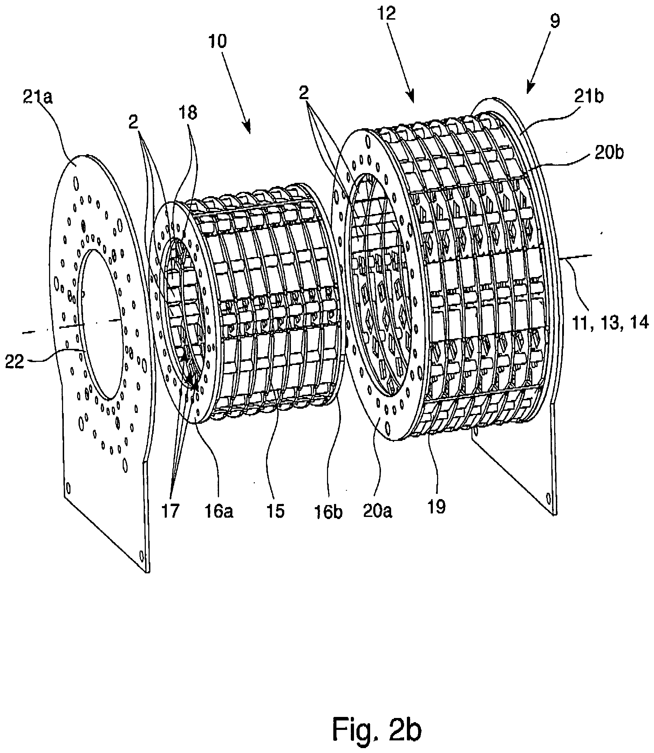

In den Fig. 2a und 2b sind die wesentlichen Komponenten eines jeden der drei Magnetisierungssegmente 9 dargestellt, wobei Fig. 2a das Magnetisierungssegment 9 im zusammengefügten Zustand und Fig. 2b das Magnetisierungssegment 9 in Explosionsdarstellung zeigt. Das Magnetisierungssegment 9 umfasst einen grundsätzlich hohlzylinderförmigen Innenträger 10 mit der konzentrischen Innenträgerlängsachse 11 und einen grundsätzlich hohlzylinderförmigen Außenträger 12 mit der konzentrischen Außenträgerlängsachse 13, wobei der Außenträger 12 um eine Segmentdrehachse 14 drehbar ist.

Der Innenträger 10 besteht im Wesentlichen aus einem grundsätzlich hohlzylinderförmigen Innenmagnetträger 15 und zwei scheibenringförmigen Innenringen 16a, 16b, und der Innenradius des Innenträgers 10 um die Innenträgerlängsachse 11 ist größer als der Außenradius des Messrohrs 5. In dem Innenmagnetträger 15 ist eine Mehrzahl von Stabmagnetaufnahmen 17 vorgesehen. Jede der Stabmagnetaufnahmen 17 hat eine zur Innenträgerlängsachse 11 parallele Achse und besteht aus einer Mehrzahl von konzentrisch zu ihrer jeweiligen Achse vorgesehenen Stabmagnetausnehmungen 18. Die Stabmagnetaufnahmen 17 erstrecken sich über die gesamte Länge des Innenmagnetträgers 15, und alle zur einer Stabmagnetaufnahme 17 gehörenden Stabmagnetausnehmungen 18 haben den gleichen rechteckigen Innenquerschnitt. Wenn von der Länge eines Körpers die Rede ist, ist die Ausdehnung des Körpers entlang seiner Längsachse gemeint. In die Stabmagnetaufnahmen 17 sind die stabförmigen Permanentmagneten 2 eingesetzt. Die Permanentmagneten 2 werden von der einen oder von der anderen Stirnseite des Innenmagnetträgers 15 aus in die Stabmagnetaufnahmen 17 eingeschoben, und die Länge der eingesetzten Permanentmagneten 2 entspricht der Länge des Innenmagnetträgers 15. Die Innenquerschnitte der Stabmagnetausnehmungen 18 sind derart an die Außenquerschnitte der Permanentmagneten 2 angepasst, dass der Innenmagnetträger 15 die in die Stabmagnetaufnahmen 17 eingesetzten Permanentmagneten 2 verdrehsicher um ihre jeweilige Längsachse ausrichtet. Der Innenmagnetträger 15 unterbindet keine Bewegungen der eingesetzten Permanentmagneten 2 in Richtung der Innenträgerlängsachse 11, weshalb die eingesetzten Permanentmagneten 2 in dieser Richtung bewegbar sind.

Der Innenring 16a ist mit der einen Stirnseite, der Innenring 16b mit der anderen Stirnseite des Innenmagnetträgers 15 durch Schraubverbindungen fest verbunden. Die mit dem Innenmagnetträger 15 verbundenen Innenringe 16a und 16b unterbinden Bewegungen der eingesetzten Permanentmagneten 2 in Richtung der Innenträgerlängsachse 11. Die eingesetzten Permanentmagneten 2 sind durch die aufeinander abgestimmten Querschnittsflächen von den eingesetzten Permanentmagneten 2 und den Stabmagnetausnehmungen 18 und durch die Innenringe 16a, 16b vollständig fixiert. Die nach außen gerichtete Stirnfläche jedes der Innenringe 16a, 16b liegt in einer zur Innenträgerlängsachse 11 senkrechten Ebene. Die nach außen gerichtete konzentrische Fläche des Innenrings 16a und die nach außen gerichtete konzentrische Fläche des Innenrings 16b liegen in einer gemeinsamen Innenkreiszylinderfläche, welche nicht von dem Innenmagnetträger 15 durchstoßen wird. Der Innenmagnetträger 15 und die mit diesem verbundenen Innenringe 16a, 16b sind konzentrisch zur Innenträgerlängsachse 11 ausgerichtet.

Der Außenträger 12 besteht im Wesentlichen aus einem grundsätzlich hohlzylinderförmigen Außenmagnetträger 19 und zwei scheibenringförmigen Außenringen 20a, 20b. In dem Außenmagnetträger 19 ist eine Mehrzahl von Stabmagnetaufnahmen 17 vorgesehen. Jede der Stabmagnetaufnahmen 17 hat eine zur Außenträgerlängsachse 13 parallele Achse und besteht aus einer Mehrzahl von konzentrisch zu ihrer jeweiligen Achse vorgesehenen Stabmagnetausnehmungen 18. Die Stabmagnetaufnahmen 17 erstrecken sich über die gesamte Länge des Außenmagnetträgers 19, und alle zu einer Stabmagnetaufnahme 17 gehörenden Stabmagnetausnehmungen 18 haben den gleichen rechteckigen Innenquerschnitt. In die Stabmagnetaufnahmen 17 sind die rechteckigen, stabförmigen Permanentmagneten 2 eingesetzt. Die Permanentmagneten 2 werden von der einen oder der anderen Stirnseite des Außenmagnetträgers 19 aus in die Stabmagnetaufnahmen 17 eingeschoben und die Länge der eingesetzten Permanentmagneten 2 entspricht der Länge des Außenmagnetträgers 19. Die Innenquerschnitte der Stabmagnetausnehmungen 18 sind derart an die Außenquerschnitte der Permanentmagneten angepasst, dass der Außenmagnetträger 19 die in die Stabmagnetaufnahmen 17 eingesetzten Permanentmagneten 2 verdrehsicher um ihre jeweilige Längsachse ausrichtet. Der Innenmagnetträger 15 unterbindet keine Bewegungen der eingesetzten Permanentmagneten 2 in Richtung der Außenträgerlängsachse 13, weshalb die eingesetzten Permanentmagneten 2 in dieser Richtung bewegbar sind.

Der Außenring 20a ist mit der einen, der Außenring 20b mit der anderen Stirnseite des Außenmagnetträgers 19 durch Schraubverbindungen fest verbunden. Die mit dem Außenmagnetträger 19 verbundenen Außenringe 20a, 20b unterbinden Bewegungen der eingesetzten Permanentmagneten 2 in Richtung der Außenträgerlängsachse 13. Die eingesetzten Permanentmagneten 2 sind durch die auf einander abgestimmten Querschnittsflächen von den eingesetzten Permanentmagneten 2 und den Stabmagnetausnehmungen 18 und durch die Außenringe 20a, 20b vollständig fixiert. Die nach außen gerichtete Stirnfläche jedes der Außenringe 20a, 20b liegt in einer zur Außenträgerlängsachse 13 senkrechten Ebene. Die nach innen gerichtete konzentrische Fläche des Außenrings 20a und die nach innen gerichtete konzentrische Fläche des Außenrings 20b liegen in einer gemeinsamen Außenkreiszylinderfläche, welche nicht von dem Außenmagnetträger 19 durchstoßen wird. Der Außenmagnetträger 19 und die mit diesem verbundenen Innenringe 20a, 20b sind konzentrisch zur Außenträgerlängsachse 13 ausgerichtet.

Die Länge des Innenträgers 10 ist geringfügig größer als die Länge des Außenträgers 12, und der Radius der Außenkreiszylinderfläche ist geringfügig größer als der Radius der Innenkreiszylinderfläche. Der Innenträger 10 und der Außenträger 12 werden zusammengefügt, indem der Außenträger 12 über den Innenträger geführt wird. Im zusammengefügten Zustand fallen Innenträgerlängsachse 11 und Außenträgerlängsachse 13 zusammen und die nach au-ßen gerichteten Stirnflächen der Innenringe 16a, 16b stehen geringfügig über die nach außen gerichteten Stirnflächen der Außenringe 20a, 20b über.

Jedes der Magnetisierungssegmente 9 umfasst im Wesentlichen neben dem Innenträger 10 und dem Außenträger 12 zwei ebene plattenförmige Segmentträger 21a, 21b. In jedem der Segmentträger 21a, 21b ist eine kreisförmige Rohrausnehmung 22 zur Durchführung des Messrohrs 5 vorgesehen. Der Segmentträger 21a ist durch Schraubverbindungen fest mit dem Innenring 16a und der Segmentträger 21b ist durch Schraubverbindungen fest mit dem Innenring 16b verbunden. Die Ausdehnung der Segmentträger 21a, 21b in einer Ebene senkrecht zur Innenträgerlängsachse 11 überragt die Ausdehnung des Außenträgers 12 in dieser Ebene.

Bewegungen des Außenträgers 12 in zur Außenträgerlängsachse 13 radialer Richtung in Bezug auf den Innenträger 10 werden durch zwei Radialgleitlager verwehrt. Das erste Radialgleitlager wird von der nach innen gerichteten radialen Oberfläche des Außenrings 20a zusammen mit der nach außen gerichteten radialen Oberflächen des Innenrings 16a gebildet, und das zweite Radialgleitlager wird von der nach innen gerichteten radialen Oberfläche des Außenrings 20b zusammen mit der nach außen gerichteten radialen Oberflächen des Innenrings 16b gebildet.

Bewegungen des Außenträgers 12 in zur Außenträgerlängsachse 13 axialer Richtung in Bezug auf den Innenträger 10 werden durch zwei Axialgleitlager verwehrt. Das erste Axialgleitlager wird von der nach außen gerichteten Oberfläche der Stirnseite des Außenrings 20a zusammen mit der nach innen gerichteten Oberfläche des Segmentträgers 21a gebildet, und das zweite Axialgleitlager wird von der nach außen gerichteten Oberfläche der Stirnseite des Außenrings 20b zusammen mit der nach innen gerichteten Oberfläche des Segmentträgers 21b gebildet.

Die einzig verbliebene Bewegungsfreiheit des Außenträgers 12 in Bezug auf den Innenträger 10 ist eine Drehung um die Außenträgerlängsachse 13. Die Segmentlängsachse 14 fällt per Definition mit der Außenträgerlängsachse 13 zusammen. Der zuvor erwähnte geringfügige Unterschied der Radien der Au-ßenkreiszylinderfläche und der Innenkreiszylinderfläche ist derart bemessen, dass die Funktion der Radialgleitlager gewährleistet ist, und der zuvor erwähnte geringfügige Unterschied der Längen des Innenträgers 10 und des Außenträgers 12 ist derart bemessen, dass die Funktion der Axialgleitlager gewährleistet ist. Die miteinander in Kontakt stehenden Oberflächen der Radialgleitlager und der Axialgleitlager sind derart ausgestaltet, dass bei Drehung des Außenträgers 12 in Bezug zum Innenträger 10 der Verschleiß und das zur Drehung benötigte Drehmoment möglichst gering sind.

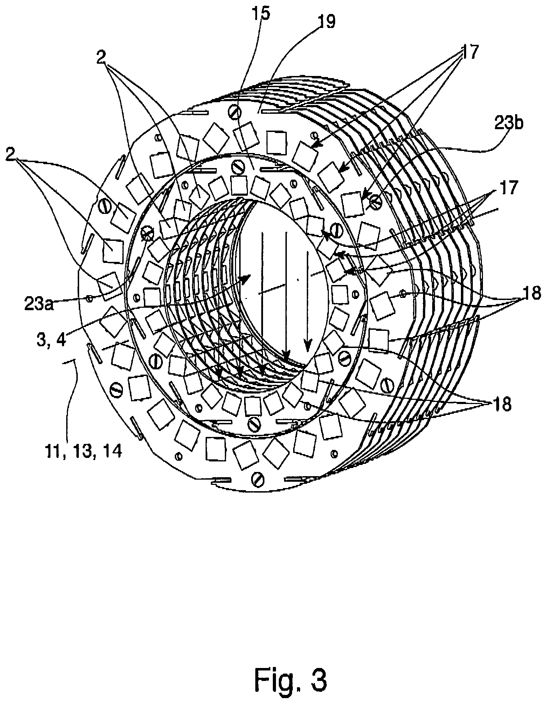

Fig. 3 zeigt den Innenmagnetträger 15 und den Außenmagnetträger 19 im zusammengefügten Zustand mit den eingebrachten Permanentmagneten 2. Das Magnetfeld 3, 4 im zylinderförmigen Innenraum des Innenmagnetträgers 15 resultiert aus der Überlagerung des Magnetfelds 3 der Permanentmagneten 2 des Innenmagnetträgers 15 und des Magnetfelds 4 der Permanentmagneten 2 des Außenmagnetträgers 19. Die Magnetfeldstärke des Magnetfelds 3, 4 im Medium 6 entlang jeder beliebigen zur Segmentdrehachse 14 parallelen Linie über die Länge des Magnetisierungssegments 9 ist konstant. Darüber hinaus ist das Magnetfeld 3, 4 über die Länge des Magnetisierungssegments 9 homogen. Wenn hier von einer konstanten Magnetfeldstärke oder von Homogenität des Magnetfelds 3, 4 im Medium 6 über der Länge des Magnetisierungssegments 9 gesprochen wird, so schließt das Schwankungen der Magnetfeldstärke und Inhomogenitäten des Magnetfelds 3, 4 nicht aus. Jedoch sind die Schwankungen der Magnetfeldstärke und Inhomogenitäten so gering, dass die angestrebte Messgenauigkeit erreicht wird.

Die Orientierung des Außenmagnetträgers 19 in Bezug auf den Innenmagnetträger 15 ist durch eine Orientierungsmarke 23a an der Stirnseite des Innenmagnetträgers 15 und durch eine Orientierungsmarke 23b an der Stirnseite des Außenmagnetträgers 19 gekennzeichnet. Der radiale Abstand des Innenmagnetträgers 15 vom Messrohr 5 und der radiale Abstand des Außenmagnetträgers 19 vom Innenmagnetträger 15 sind möglichst gering. Durch die geringen Abstände ist das mit dem Magnetfeld 3, 4 zu durchflutende Volumen, im dem auch das Messrohr 5 angeordnet ist, minimal und entsprechend ist auch der von den Permanentmagneten 2 aufzubringende magnetische Fluss minimal. Größere radiale Abstände würden demnach mehr Permanentmagnetmaterial erfordern.

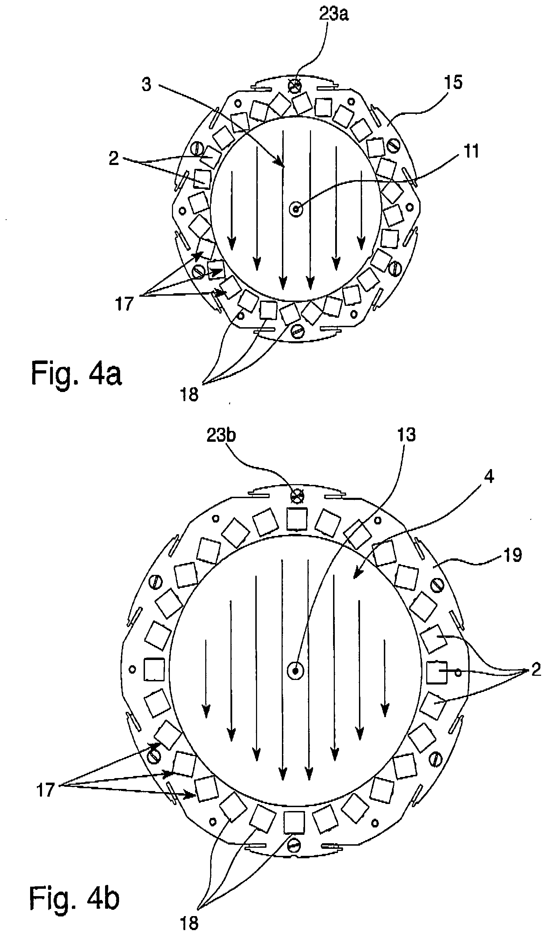

Fig. 4a zeigt den Innenmagnetträger 15 mit den eingebrachten Permanentmagneten 2 in Aufsicht. Der Innenmagnetträger 15 richtet die eingebrachten Permanentmagneten 2 zu einem Halbach-Array aus, dessen Magnetfeld 3 sich außerhalb des Innenmagnetträgers 15 im Wesentlichen in den zylinderförmigen Innenraum des Innenmagnetträgers 15 erstreckt und im Medium 6 homogen ist. Fig. 4b zeigt den Außenmagnetträger 19 mit den eingebrachten Permanentmagneten 2 in Aufsicht. Der Außenmagnetträger 19 richtet die eingebrachten Permanentmagneten 2 ebenfalls zu einem Halbach-Array aus, dessen Magnetfeld 4 sich außerhalb des Außenmagnetträgers 19 im Wesentlichen in den zylinderförmigen Innenraum des Außenmagnetträgers 19 erstreckt und im Medium 6 homogen ist. Die beiden Halbach-Arrays sind derart aufeinander abgestimmt, dass die Beträge der Feldstärken des Magnetfelds 3 und des Magnetfelds 4 im Medium 6 gleich groß sind. Durch den Umstand, dass sich das Magnetfeld 3 im Wesentlichen nicht in den Außenraum des Innenträgers 15 erstreckt, ist zum Drehen des Außenträgers 12 im Wesentlichen nur die Reibung der Radialgleitlager und der Axialgleitlager zu überwinden.

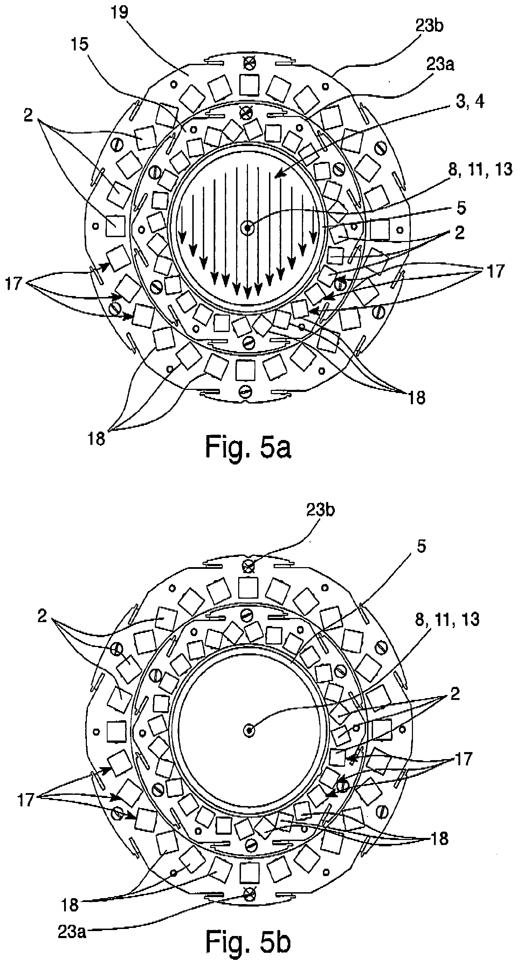

Fig. 5a zeigt den Innenmagnetträger 15 und den Außenmagnetträger 19 mit den eingebrachten Permanentmagneten 2 in einer ersten Orientierung zueinander. Das Magnetfeld 3 und das Magnetfeld 4 sind parallel zueinander ausgerichtet. Im Medium 6 ist die Magnetfeldstärke des durch Überlagerung resultierenden Magnetfelds demnach doppelt so groß wie die Magnetfeldstärke des Magnetfelds 3 oder des Magnetfelds 4 für sich betrachtet. Fig. 5b zeigt den Innenmagnetträger 15 und den Außenmagnetträger 19 mit den eingebrachten Permanentmagneten 2 in einer zweiten Orientierung zueinander. Das Magnetfeld 3 und das Magnetfeld 4 sind antiparallel zueinander ausgerichtet. Im Medium 6 ist daher kein Magnetfeld vorhanden. Wenn hier von keinem Magnetfeld im Medium 6 gesprochen wird, schließt das ein im Medium 6 vorhandenes Magnetfeld mit einer geringen Magnetfeldstärke nicht aus. Jedoch ist die verbleibende Magnetfeldstärke so gering, dass die angestrebte Messgenauigkeit erreicht wird.

Die drei Magnetisierungssegmente 9 der Magnetisierungsvorrichtung 1, siehe Fig. 1a, sind derart zueinander ausgerichtet, dass ihre Segmentdrehachsen 14 mit der Längsachse 8 des Messrohrs 5 zusammenfallen. Zusätzlich sind die Innenträger 10 derart zueinander orientiert, dass deren Magnetfelder 3 parallel sind. Jeder der Außenträger 12 ist unabhängig von den anderen Außenträgern 12 um die Längsachse 8 des Messrohrs 5 drehbar, und eine Drehung eines jeden der Außenträger 12 erfolgt durch einen - in den Figuren nicht sichtbaren - Aktor. Die Aktoren können beliebige Orientierungen der Außenträger 12 in Bezug auf die Innenträger 10 einstellen.

In einem ersten Verfahren zum Betreiben der Magnetisierungseinrichtung 1 sind die drei Außenträger 12 durch die Aktoren immer derart zueinander orientiert, dass die Magnetfelder 4 parallel zueinander sind. Demnach erfolgen Drehungen der drei Außenträger 12 in Bezug auf die Innenträger 10 zusammen und gleichmäßig. Durch Drehungen der Außenträger 12 in Bezug auf die Innenträger 10 wird das Magnetfeld 3, 4 im Medium 6 über die Magnetisierungsstrecke 7 auf beliebige Magnetfeldstärken zwischen Null und der doppelten Magnetfeldstärke des Magnetfelds 3 oder des Magnetfelds 4 für sich betrachtet eingestellt. Infolgedessen ändert sich die Magnetisierung des strömenden Mediums 6 entsprechend. Das Magnetfeld 3, 4 im Medium 6 weist über die Magnetisierungsstrecke 7 nur eine einzige Richtung auf. Zusätzlich ist die Magnetfeldstärke des Magnetfelds 3, 4 im Medium 6 entlang jeder beliebigen zur Längsachse 8 des Messrohrs 5 parallelen Linie über die Magnetisierungsstrecke 7 konstant. Darüber hinaus ist das Magnetfeld 3, 4 über die Magnetisierungsstrecke 7 homogen.

Im zweiten Verfahren zum Betreiben der Magnetisierungseinrichtung 1 werden die Außenträger 12 der drei Magnetisierungssegmente 9 unabhängig voneinander orientiert. Dabei werden nur zwei verschiedene Orientierungen eines jeden der Außenträger 12 in Bezug auf seinen Innenträger 10 eingestellt. Bei der ersten Orientierung sind das Magnetfeld 3 und das Magnetfeld 4 des jeweiligen Magnetisierungssegments 9 parallel ausgerichtet. Die Magnetfeldstärke des Magnetfelds 3, 4 im Medium 6 ist die doppelte Magnetfeldstärke des Magnetfelds 3 oder des Magnetfelds 4 für sich betrachtet. Bei der zweiten Orientierung sind das Magnetfeld 3 und das Magnetfeld 4 antiparallel ausgerichtet. Die Magnetfeldstärke 3, 4 im Medium 6 ist Null. Bei den mit diesem Verfahren erzeugbaren Magnetisierungen des Mediums 6, erfolgt die Magnetisierung stets mit der gleichen Magnetfeldstärke im Medium 6. Das Magnetfeld 3, 4 im Medium 6 weist unabhängig von den Orientierungen der Außenträger 12 der einzelnen Magnetisierungssegmente 9 über die Magnetisierungsstrecke 7 nur eine einzige Richtung auf.

### Bezugszeichen:

- 1.: Magnetisierungseinrichtung
- 2.: Permanentmagnet
- 3,4.: Magnetfeld
- 5.: Messrohr
- 6.: Medium
- 7.: Magnetisierungsstrecke
- 8.: Längsachse des Messrohrs
- 9.: Magnetisierungssegment
- 10.: Innenträger
- 11.: Innenträgerlängsachse
- 12.: Außenträger
- 13.: Außenträgerlängsachse
- 14.: Segmentdrehsachse
- 15.: Innenmagnetträger
- 16a, 16b.: Innenring
- 17.: Stabmagnetaufnahmen
- 18.: Stabmagnetausnehmung
- 19.: Außenmagnetträger
- 20a, 20b.: Außenring
- 21a, 21b.: Segmentträger
- 22.: Rohrausnehmung
- 23a, 23b.: Trägerorientierungsmarke

## Patentansprüche

1. Kernmagnetisches Durchflussmessgerät zur Durchflussmessung eines durch ein Messrohr (5) strömenden Mediums (6) mit einer Magnetisierungseinrichtung (1) zur Magnetisierung und zur Variation der Magnetisierung des durch das Messrohr (5) strömenden Mediums (6) über eine Magnetisierungsstrecke (7) entlang der Längsachse (8) des Messrohrs (5), wobei die Magnetisierungseinrichtung (1) zur Erzeugung des der Magnetisierung des Mediums (6) dienenden Magnetfelds (3, 4) mit Permanentmagneten (2) versehen ist und mindestens zwei in Richtung der Längsachse (8) des Messrohrs (5) hintereinander angeordnete Magnetisierungssegmente (9) aufweist,
**dadurch gekennzeichnet,**
**dass** auch bei über die Länge der Magnetisierungstrecke (7) unterschiedlicher Magnetfeldstärke im Medium (6) über die gesamte Magnetisierungsstrecke (7) das Magnetfeld (3, 4) die gleiche Richtung aufweist,
**dass** jedes der Magnetisierungssegmente (9) einen mit Permanentmagneten (2) bestückten Innenträger (10) und einen mit Permanentmagneten (2) bestückten Außenträger (12) aufweist und der Innenträger (10) um das Messrohr (5) und der Außenträger (12) um den Innenträger (10) angeordnet ist und
**dass** zur Variation der Magnetfeldstärke im Medium (6) und damit auch zur Variation der Magnetisierung des Mediums (6) die Orientierung zwischen dem Innenträger (10) und dem Außenträger (12) durch Drehung des Innenträgers (10) oder / und des Außenträgers (12) um eine Segmentdrehachse (14) einstellbar ist.

2. Kernmagnetisches Durchflussmessgerät nach Anspruch 1, **dadurch gekennzeichnet, dass** bei jedem der Magnetisierungselemente (9) entweder die Orientierung zwischen dem Innenträger (10) und dem Außenträger (12) für die maximale Feldstärke (3, 4) im Medium (6) oder die Orientierung zwischen dem Innenträger (10) und dem Außenträger (12) für die minimale Feldstärke (3, 4) im Medium (6) eingestellt ist.

3. Kernmagnetisches Durchflussmessgerät nach Anspruch 1 oder 2, **dadurch gekennzeichnet, dass** bei mindestens einem der Magnetisierungssegmente (9) das Magnetfeld (3) des Innenträgers (10) und das Magnetfeld (4) des Außenträgers (12) derart ausgebildet sind, dass bei der Orientierung zwischen dem Innenträger (10) und dem Außenträger (12) für die minimale Magnetfeldstärke (3, 4) im Medium (6) kein Magnetfeld im Medium (6) vorhanden ist.

4. Kernmagnetisches Durchflussmessgerät nach einem der Ansprüche 1 bis 3, **dadurch gekennzeichnet, dass** bei mindestens einem der Magnetisierungssegmente (9) der Innenträger (10) feststehend in Bezug auf das Messrohr (5) ist und der Außenträger (12) um die Segmentdrehachse (14) drehbar gelagert ist.

5. Kernmagnetisches Durchflussmessgerät nach einem der Ansprüche 1 bis 4, **dadurch gekennzeichnet, dass** bei mindestens einem der Magnetisierungssegmente (9) der Innenträger (10) an jedem seiner beiden Enden in Bezug auf die Segmentdrehachse (14) fest mit jeweils einem Segmentträger (21a, 21b) verbunden ist, der Außenträger (12) mit dem Innenträger (10) wenigstens ein Radialgleitlager bildet und der Außenträger (12) mit den Segmentträgern (21a, 21b) wenigstens ein Axialgleitlager bildet.

6. Kernmagnetisches Durchflussmessgerät nach einem der Ansprüche 1 bis 5, **dadurch gekennzeichnet, dass** bei mindestens einem der Magnetisierungssegmente zur Drehung des Innenträgers (10) oder / und des Außenträgers (12), vorzugsweise des Außenträgers (12), um die Segmentdrehachse (14) ein Aktor vorgesehen ist.

7. Kernmagnetisches Durchflussmessgerät nach Anspruch 6, **dadurch gekennzeichnet, dass** bei mindestens einem der Magnetisierungssegmente (9) durch den Aktor zumindest die Orientierung zwischen dem Innenträger (10) und dem Außenträger (12) mit dem minimalen Magnetfeld (3, 4) im Medium (6) und die Orientierung zwischen dem Innenträger (10) und dem Außenträger (12) mit dem maximalen Magnetfeld (3, 4) im Medium (6) einstellbar ist.

8. Kernmagnetisches Durchflussmessgerät nach einem der Ansprüche 1 bis 7, **dadurch gekennzeichnet, dass** mindestens ein weiteres mit Permanentmagneten (2) bestücktes Magnetisierungssegment (9) vorgesehen ist und der magnetische Widerstand des weiteren Magnetisierungssegments (9) zur Variation der Magnetfeldstärke (3, 4) im Medium (6) und damit auch zur Variation der Magnetisierung des Mediums (6) einstellbar ist.

9. Kernmagnetisches Durchflussmessgerät nach Anspruch 8, **dadurch gekennzeichnet, dass** das weitere Magnetisierungssegment aus einem ersten Teilsegment und aus einem zweiten Teilsegment besteht und die beiden Teilsegmente beabstandet sind und dass der sich zwischen dem ersten Teilsegment und dem zweiten Teilsegment durch die Beabstandung ergebene Spalt einen einstellbaren magnetischen Widerstand darstellt.

10. Kernmagnetisches Durchflussmessgerät nach einem der Ansprüche 1 bis 9, **dadurch gekennzeichnet, dass** die Permanentmagneten (2) als Halbach-Array angeordnet sind.

11. Kernmagnetisches Durchflussmessgerät nach einem der Ansprüche 1 bis 10, **dadurch gekennzeichnet, dass** zur Variation der Magnetfeldstärke im Medium (6) und damit auch zur Variation der Magnetisierung des Mediums (6) mindestens ein Elektromagnet an der Magnetisierungseinrichtung (1) angeordnet ist, dass das Magnetfeld des Elektromagneten parallel oder antiparallel zum Magnetfeld (3, 4) der Magnetisierungseinrichtung (1) ausgerichtet ist und dass die Magnetfeldstärke des vom Elektromagneten erzeugten Magnetfelds einstellbar ist.

12. Kernmagnetisches Durchflussmessgerät nach einem der Ansprüche 1 bis 11, **dadurch gekennzeichnet, dass** die Magnetisierungseinrichtung (1) oder mindestens ein Magnetisierungssegment (9) bewegbar entlang der Längsachse (8) des Messrohrs (5) angeordnet ist und dass durch den einstellbaren Abstand der Magnetisierungseinrichtung (1) oder des Magnetisierungssegments (9) entlang der Längsachse (8) des Messrohrs (5) zu einer Messvorrichtung die Magnetisierung des Mediums (6) an der Messvorrichtung einstellbar ist.

13. Kernmagnetisches Durchflussmessgerät nach einem der Ansprüche 1 bis 12, **dadurch gekennzeichnet, dass** die Magnetisierungssegmente (9) unterschiedlich lange Teilmagnetisierungsstrecken bilden.

14. Kernmagnetisches Durchflussmessgerät nach einem der Ansprüche 1 bis 13, **dadurch gekennzeichnet, dass** die Magnetfeldstärke des von den Permanentmagneten (2) erzeugten Magnetfelds (3, 4) im Medium (6) entlang jeder beliebigen zur Längsachse (8) des Messrohrs (5) parallelen Linie über die Länge eines jeden der Magnetisierungssegmente (9) oder über die Magnetisierungsstrecke (7) konstant ist.

15. Kernmagnetisches Durchflussmessgerät nach einem der Ansprüche 1 bis 14, **dadurch gekennzeichnet, dass** das von den Permanentmagneten (2) erzeugte Magnetfeld (3, 4) im Medium (6) über die Länge eines jeden der Magnetisierungssegmente (9) oder über die Magnetisierungsstrecke (7) homogen ist.

## Claims

1. Nuclear magnetic flowmeter for flow measurement of a medium (6) flowing through a measuring tube (5) with a magnetizing device (1) for magnetization and for varying the magnetization of the medium (6) flowing through the measuring tube (5) over a magnetization path (7) along the longitudinal axis (8) of the measuring tube (5), wherein the magnetizing device (1) is provided with permanent magnets (2) for generating the magnetic field (3, 4) serving to magnetize the medium (6) and has at least two magnetizing segments (9) arranged one behind the other in the direction of the longitudinal axis (8) of the measuring tube (5),
**characterized in**
**that** the magnetic field (3, 4) has the same direction over the entire magnetization path (7) even if the magnetic field strength in the medium (6) varies over the length of the magnetization path (7),
**that** each of the magnetization segments (9) has an inner carrier (10) equipped with permanent magnets (2) and an outer carrier (12) equipped with permanent magnets (2), and the inner carrier (10) is arranged around the measuring tube (5) and the outer carrier (12) is arranged around the inner carrier (10), and
**that**, in order to vary the magnetic field strength in the medium (6) and thus also to vary the magnetization of the medium (6), the orientation between the inner carrier (10) and the outer carrier (12) can be adjusted by rotating the inner carrier (10) and/or the outer carrier (12) around a segment rotation axis (14).

2. Nuclear magnetic flowmeter according to claim 1, **characterized in that** for each of the magnetizing elements (9) either the orientation between the inner carrier (10) and the outer carrier (12) is set for the maximum field strength (3, 4) in the medium (6) or the orientation between the inner carrier (10) and the outer carrier (12) is set for the minimum field strength (3, 4) in the medium (6).

3. Nuclear magnetic flowmeter according to claim 1 or 2, **characterized in that**, for at least one of the magnetization segments (9), the magnetic field (3) of the inner carrier (10) and the magnetic field (4) of the outer carrier (12) are designed such that, in the orientation between the inner carrier (10) and the outer carrier (12), no magnetic field is present in the medium (6) for the minimum magnetic field strength (3, 4) in the medium (6).

4. Nuclear magnetic flowmeter according to any one of claims 1 to 3, **characterized in that**, for at least one of the magnetization segments (9), the inner carrier (10) is fixed with respect to the measuring tube (5) and the outer carrier (12) is mounted rotatably around the segment rotation axis (14).

5. Nuclear magnetic flowmeter according to any one of claims 1 to 4, **characterized in that**, for at least one of the magnetization segments (9), the inner carrier (10) on each of its two ends with reference to the axis (14) of rotation of a segment is connected securely to one segment carrier (21a, 21b) at a time, the outer carrier (12) with the inner carrier (10) forms at least one radial slide bearing and the outer carrier (12) with the segment carriers (21a, 21b) forms at least one axial slide bearing.

6. Nuclear magnetic flowmeter according to any one of claims 1 to 5, **characterized in that** an actuator is provided in at least one of the magnetization segments for rotating the inner carrier (10) and/or the outer carrier (12), preferably the outer carrier (12), around the segment axis of rotation (14).

7. Nuclear magnetic flowmeter according to claim 6, **characterized in that**, for at least one of the magnetization segments (9), at least the orientation between the inner carrier (10) and the outer carrier (12) with the minimum magnetic field (3, 4) in the medium (6) and the orientation between the inner carrier (10) and the outer carrier (12) with the maximum magnetic field (3, 4) in the medium (6) can be adjusted by the actuator.

8. Nuclear magnetic flowmeter according to any one of claims 1 to 7, **characterized in that** at least one further magnetizing segment (9) equipped with permanent magnets (2) is provided and the magnetic resistance of the further magnetizing segment (9) is adjustable to vary the magnetic field strength (3, 4) in the medium (6) and thus also to vary the magnetization of the medium (6).

9. Nuclear magnetic flowmeter according to claim 8, **characterized in that** the further magnetization segment consists of a first partial segment and of a second partial segment and the two partial segments are spaced apart and that the gap resulting between the first partial segment and the second partial segment due to the spacing represents an adjustable magnetic resistance.

10. Nuclear magnetic flowmeter according to any one of claims 1 to 9, **characterized in that** the permanent magnets (2) are arranged as a Halbach array.

11. Nuclear magnetic flow meter according to any one of claims 1 to 10, **characterized in that** for variation of the magnetic field strength in the medium (6) and thus also for variation of the magnetization of the medium (6) at least one electromagnet is arranged on the magnetization device (1), that the magnetic field of the electromagnet is aligned parallel or antiparallel to the magnetic field (3, 4) of the magnetization device (1) and that the magnetic field strength of the magnetic field generated by the electromagnet is adjustable.

12. Nuclear magnetic flow meter according to any one of claims 1 to 11, **characterized in that** the magnetizing device (1) or at least one magnetizing segment (9) is arranged movably along the longitudinal axis (8) of the measuring tube (5) and that the magnetization of the medium (6) at the measuring device is adjustable by the adjustable distance of the magnetizing device (1) or the magnetizing segment (9) along the longitudinal axis (8) of the measuring tube (5) to a measuring device.

13. Nuclear magnetic flowmeter according to any one of claims 1 to 12, **characterized in that** the magnetizing segments (9) form partial magnetization segments of different lengths.

14. Nuclear magnetic flowmeter according to any one of claims 1 to 13, **characterized in that** the magnetic field strength of the magnetic field (3, 4) generated by the permanent magnets (2) in the medium (6) along any line parallel to the longitudinal axis (8) of the measuring tube (5) is constant over the length of each of the magnetizing segments (9) or over the magnetization path (7).

15. Nuclear magnetic flowmeter according to any one of claims 1 to 14, **characterized in that** the magnetic field (3, 4) generated by the permanent magnets (2) is homogeneous in the medium (6) over the length of each of the magnetizing segments (9) or over the magnetization path (7).

## Revendications

1. Débitmètre à noyau magnétique pour la mesure du débit d'un fluide (6) qui s'écoule à travers un tube de mesure (5), comprenant un dispositif de magnétisation (1) destiné à magnétiser et faire varier la magnétisation du fluide (6) qui s'écoule à travers le tube de mesure (5) sur un tronçon de magnétisation (7) le long de l'axe longitudinal (8) du tube de mesure (5), le dispositif de magnétisation (1) étant pourvu d'aimants permanents (2) destinés à générer le champ magnétique (3, 4) qui sert à la magnétisation du fluide (6) et possédant au moins deux segments de magnétisation (9) disposés l'un derrière l'autre dans la direction de l'axe longitudinal (8) du tube de mesure (5),
**caractérisé en ce**
**que** le champ magnétique (3, 4) présente la même direction sur toute la longueur du tronçon de magnétisation (7) même dans le cas d'intensités de champ magnétique dans le fluide (6) différentes sur la longueur du tronçon de magnétisation (7),
**que** chacun des segments de magnétisation (9) possède un élément porteur interne (10) garni d'aimants permanents (2) et un élément porteur externe (12) garni d'aimants permanents (2) et l'élément porteur interne (10) est disposé autour du tube de mesure (5) et l'élément porteur externe (12) est disposé autour de l'élément porteur interne (10) et
**qu'**en vue de faire varier l'intensité du champ magnétique dans le fluide (6) et ainsi également en vue de faire varier la magnétisation du fluide (6), l'orientation entre l'élément porteur interne (10) et l'élément porteur externe (12) est réglable par rotation de l'élément porteur interne (10) et/ou de l'élément porteur externe (12) autour d'un axe de rotation de segment (14).

2. Débitmètre à noyau magnétique selon la revendication 1, **caractérisé en ce que** pour chacun des segments de magnétisation (9), soit l'orientation entre l'élément porteur interne (10) et l'élément porteur externe (12) est réglée pour l'intensité de champ (3, 4) maximale dans le fluide (6), soit l'orientation entre l'élément porteur interne (10) et l'élément porteur externe (12) est réglée pour l'intensité de champ (3, 4) minimale dans le fluide (6).

3. Débitmètre à noyau magnétique selon la revendication 1 ou 2, **caractérisé en ce que** pour au moins l'un des segments de magnétisation (9), le champ magnétique (3) de l'élément porteur interne (10) et le champ magnétique (4) de l'élément porteur externe (12) sont configurés de telle sorte que lors de l'orientation entre l'élément porteur interne (10) et l'élément porteur externe (12) pour l'intensité de champ (3, 4) maximale dans le fluide (6), aucun champ magnétique n'est présent dans le fluide (6).

4. Débitmètre à noyau magnétique selon l'une des revendications 1 à 3, **caractérisé en ce que** pour au moins l'un des segments de magnétisation (9), l'élément porteur interne (10) est fixe par rapport au tube de mesure (5) et l'élément porteur externe (12) est monté à rotation autour de l'axe de rotation de segment (14).

5. Débitmètre à noyau magnétique selon l'une des revendications 1 à 4, **caractérisé en ce que** pour au moins l'un des segments de magnétisation (9), l'élément porteur interne (10) est relié au niveau de chacune de ses deux extrémités respectivement à un porte-segment (21a, 21b) en position fixe par rapport à l'axe de rotation de segment (14), l'élément porteur externe (12) forme avec l'élément porteur interne (10) au moins un palier lisse radial et l'élément porteur externe (12) forme avec les porte-segments (21a, 21b) au moins un palier lisse axial.

6. Débitmètre à noyau magnétique selon l'une des revendications 1 à 5, **caractérisé en ce que** pour au moins l'un des segments de magnétisation, un actionneur est présent pour la rotation de l'élément porteur interne (10) et/ou de l'élément porteur externe (12), de préférence de l'élément porteur externe (12), autour d'un axe de rotation de segment (14).

7. Débitmètre à noyau magnétique selon la revendication 6, **caractérisé en ce que** pour au moins l'un des segments de magnétisation (9), au moins l'orientation entre l'élément porteur interne (10) et l'élément porteur externe (12) avec le champ magnétique (3, 4) minimal dans le fluide (6) et l'orientation entre l'élément porteur interne (10) et l'élément porteur externe (12) avec le champ magnétique (3, 4) maximal dans le fluide (6) peuvent être réglées par l'actionneur.

8. Débitmètre à noyau magnétique selon l'une des revendications 1 à 7, **caractérisé en ce qu'**au moins un segment de magnétisation (9) supplémentaire garni d'aimants permanents (2) est présent et la résistance magnétique du segment de magnétisation (9) supplémentaire est réglable pour faire varier l'intensité de champ magnétique (3, 4) dans le fluide (6) et ainsi également pour faire varier la magnétisation du fluide (6).

9. Débitmètre à noyau magnétique selon la revendication 8, **caractérisé en ce que** le segment de magnétisation supplémentaire se compose d'un premier segment partiel et d'un deuxième segment partiel et les deux segments partiels sont espacés et **en ce que** l'entrefer produit par l'espacement entre le premier segment partiel et le deuxième segment partiel représente une résistance magnétique réglable.

10. Débitmètre à noyau magnétique selon l'une des revendications 1 à 9, **caractérisé en ce que** les aimants permanents (2) sont disposés sous la forme d'un réseau de Halbach.

11. Débitmètre à noyau magnétique selon l'une des revendications 1 à 10, **caractérisé en ce que** pour faire varier l'intensité de champ magnétique dans le fluide (6) et ainsi également pour faire varier la magnétisation du fluide (6), au moins un électroaimant est disposé au niveau du dispositif de magnétisation (1), **en ce que** le champ magnétique de l'électroaimant est orienté en parallèle ou en anti-parallèle par rapport au champ magnétique (3, 4) du dispositif de magnétisation (1) et **en ce que** l'intensité de champ magnétique du champ magnétique généré par l'électroaimant est réglable.

12. Débitmètre à noyau magnétique selon l'une des revendications 1 à 11, **caractérisé en ce que** le dispositif de magnétisation (1) ou au moins un segment de magnétisation (9) est disposé mobile le long de l'axe longitudinal (8) du tube de mesure (5) et **en ce que** la magnétisation du fluide (6) est réglable au niveau d'un arrangement de mesure par l'écart réglable du dispositif de magnétisation (1) ou du segment de magnétisation (9) le long de l'axe longitudinal (8) du tube de mesure (5) par rapport à l'arrangement de mesure.

13. Débitmètre à noyau magnétique selon l'une des revendications 1 à 12, **caractérisé en ce que** les segments de magnétisation (9) forment des tronçons de magnétisation partiels de différentes longueurs.

14. Débitmètre à noyau magnétique selon l'une des revendications 1 à 13, **caractérisé en ce que** l'intensité de champ magnétique du champ magnétique (3, 4) généré par les aimants permanents (2) dans le fluide (6) est constante le long de n'importe quelle ligne parallèle à l'axe longitudinal (8) du tube de mesure (5) sur la longueur de chacun des segments de magnétisation (9) ou sur le tronçon de magnétisation (7) .

15. Débitmètre à noyau magnétique selon l'une des revendications 1 à 14, **caractérisé en ce que** champ magnétique (3, 4) généré par les aimants permanents (2) dans le fluide (6) est homogène sur la longueur de chacun des segments de magnétisation (9) ou sur le tronçon de magnétisation (7).
